# EUROPEAN PATENT APPLICATION

(11) **EP 4 495 925 A1**
(43) Date of publication of application: **22.01.2025**
(21) Application number: 24712396.1
(22) Date of filing: 08.03.2024
(51) Int. Cl.: G09G 3/34, G02F 1/1335

(54) **DISPLAY DEVICE AND CONTROL METHOD THEREFOF**

(30) Priority: 09.06.2023 KR 20230074481; 31.07.2023 KR 20230099804
(71) Applicant: Samsung Electronics Co., Ltd., Suwon-si, Gyeonggi-do 16677 (KR)
(72) Inventor: LEE, Minhoon, Suwon-si Gyeonggi-do 16677 (KR)
(74) Representative: Gulde & Partner
(86) International application number: PCT/KR2024/003052
(87) International publication number: WO 2024/253297

(57) **Abstract**

A display device is disclosed. The display device includes a display panel, a backlight unit disposed at a back surface of the display panel, and including a plurality of light emitting lines, a first driver integrated circuit (IC) and a second driver IC, a plurality of first connection lines configured to connect a plurality of first light emitting lines from among the plurality of light emitting lines with the first driver IC, and a plurality of second connection lines configured to connect a plurality of second light emitting lines, which are alternately disposed with the plurality of first light emitting lines from among the plurality of light emitting lines, with the second driver IC.

## Description

### [Technical Field]

The disclosure relates to a display device and a controlling method thereof, and more particularly to a method of disposing a plurality of light emitting devices which connect with a driver integrated circuit (IC) in a pre-set pattern within a backlight unit.

### [Background Art]

With developments in electronic technology, technical developments with respect to electronic devices of various types have become more active. Display devices such as a television (TV) used in a household of a user may adjust luminance of a screen by controlling current which flows in a backlight unit. The current that flows in the backlight unit may be controlled through a driver integrated circuit (driver IC or DDI) provided in a display device.

The driver IC may be a semiconductor device, and a deviation in output value may occur even if it is a same driver IC due to the particulars of a semiconductor manufacturing process which performs processing within a fine range (e.g., oxide process). If a deviation of an output value between a plurality of driver ICs within the display device is greater than or equal to a pre-set range, a magnitude of current which flows in the backlight unit may also vary, and accordingly, problems with user visibility and uniformity of display devices may occur.

### [Disclosure]

### [Technical Solution]

According to an embodiment of the disclosure, a display device includes a display panel, a backlight unit disposed at a back surface of the display panel, and including a plurality of light emitting lines, a first driver integrated circuit (IC) and a second driver IC, a plurality of first connection lines configured to connect a plurality of first light emitting lines from among the plurality of light emitting lines with the first driver IC, and a plurality of second connection lines configured to connect a plurality of second light emitting lines, which are alternately disposed with the plurality of first light emitting lines from among the plurality of light emitting lines, with the second driver IC.

According to an embodiment of the disclosure, a controlling method of a display device includes emitting light through a backlight unit which is disposed at a back surface of the display panel and includes a plurality of light emitting lines.

The controlling method includes supplying current to a plurality of first light emitting lines through a plurality of first connection lines configured to connect the first light emitting lines from among the plurality of light emitting lines with a first driver integrated circuit (IC).

The controlling method includes supplying current to a plurality of second light emitting lines through a plurality of second connection lines configured to connect the second light emitting lines, which are alternately disposed with the plurality of first light emitting lines from among the plurality of light emitting lines, with a second driver IC.

According to an embodiment of the disclosure, in terms of a non-transitory computer-readable storage medium configured to store computer instructions for a display device to perform an operation when executed by a processor of the display device, the operation includes emitting light through a backlight unit which is disposed at a back surface of the display panel and includes a plurality of light emitting lines.

The operation includes supplying current to a plurality of first light emitting lines through a plurality of first connection lines configured to connect the first light emitting lines from among the plurality of light emitting lines with a first driver integrated circuit (IC).

The operation includes supplying current to a plurality of second light emitting lines through a plurality of second connection lines configured to connect the second light emitting lines, which are alternately disposed with the plurality of first light emitting lines from among the plurality of light emitting lines, with a second driver IC.

### [Description of Drawings]

FIG. 1 is a diagram illustrating a control method of a display device of the related art according to an embodiment;
FIG. 2 is a block diagram illustrating a configuration of a display device according to an embodiment;
FIG. 3 is a flowchart illustrating a controlling method of a display device according to an embodiment;
FIG. 4 is a diagram illustrating a disposition structure of first light emitting lines and second light emitting lines according to an embodiment;
FIG. 5 is a diagram illustrating a configuration of a display device according to an embodiment;
FIG. 6 is a diagram illustrating a driving method of a backlight unit according to an embodiment;
FIG. 7 is a diagram illustrating a method of receiving information for controlling light emitting devices by a driver IC according to an embodiment;
FIG. 8 is a diagram illustrating a method of controlling first current and second current according to an embodiment;
FIG. 9 is a diagram illustrating a display device implemented with a plurality of driver ICs according to an embodiment;
FIG. 10 is a diagram illustrating a structure of a light emitting device according to an embodiment;
FIG. 11 is a diagram illustrating a display device implemented with a plurality of driver ICs according to an embodiment;
FIG. 12 is a diagram illustrating a display device implemented with a plurality of driver ICs according to an embodiment; and
FIG. 13 is a diagram illustrating a display device implemented with a plurality of driver ICs according to an embodiment.

### [Detailed Description of Exemplary Embodiments]

The disclosure will be described in detail below with reference to the accompanying drawings.

Terms used in the disclosure will be briefly described, and the disclosure will be described in detail.

The terms used in describing embodiments of the disclosure are general terms selected that are currently widely used considering their function herein. However, the terms may change depending on intention, legal or technical interpretation, emergence of new technologies, and the like of those skilled in the related art. Further, in certain cases, there may be terms arbitrarily selected, and in this case, the meaning of the term will be disclosed in greater detail in the corresponding description. Accordingly, the terms used herein are not to be understood simply as its designation but based on the meaning of the term and the overall context of the disclosure.

In the disclosure, expressions such as "have," "may have," "include," "may include," or the like are used to designate a presence of a corresponding characteristic (e.g., elements such as numerical value, function, operation, or component), and not to preclude a presence or a possibility of additional characteristics.

The expression at least one of A and/or B is to be understood as indicating any one of "A" or "B" or "A and B."

Expressions such as "first," "second," "1st," "2nd," and so on used herein may be used to refer to various elements regardless of order and/or importance. Further, it should be noted that the expressions are merely used to distinguish an element from another element and not to limit the relevant elements.

When a certain element (e.g., first element) is indicated as being "(operatively or communicatively) coupled with/to" or "connected to" another element (e.g., second element), it may be understood as the certain element being directly coupled with/to the another element or as being coupled through other element (e.g., third element).

A singular expression includes a plural expression, unless otherwise specified. It is to be understood that the terms such as "form" or "include" are used herein to designate a presence of a characteristic, number, step, operation, element, component, or a combination thereof, and not to preclude a presence or a possibility of adding one or more of other characteristics, numbers, steps, operations, elements, components or a combination thereof.

The term "module" or "part" used in one or more embodiments herein perform at least one function or operation, and may be implemented with a hardware or software, or implemented with a combination of hardware and software. In addition, a plurality of "modules" or a plurality of "parts," except for a "module" or a "part" which needs to be implemented to a specific hardware, may be integrated in at least one module and implemented as at least one processor (not shown).

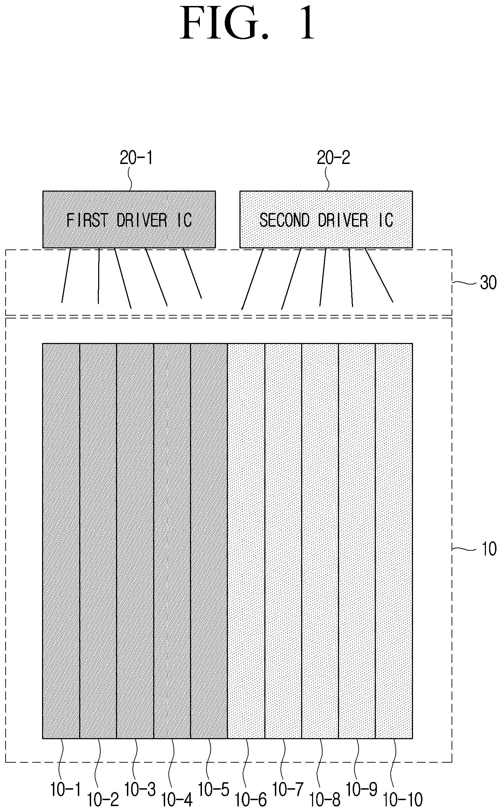

FIG. 1 is a diagram illustrating a control method of a display device of the related art according to an embodiment.

Referring to FIG. 1, a display device of the related art according to an embodiment may include a plurality of driver integrated circuits (or driver ICs) 20-1 and 20-2. The respective driver ICs may be connected with light emitting lines (or a group of a plurality of light emitting devices) 10-1 to 10-10 within a backlight unit 10 included in the display device through connection lines 30

The light emitting lines connected with the driver ICs included in the display device of the related art according to an embodiment may be adjacently positioned within the backlight unit 10 as shown in FIG. 1. According to an example, a first driver IC 20-1 may be connected with a portion of the light emitting lines 10-1 to 10-5 within the backlight unit 10 through the connection lines 30, and the first driver IC 20-1 may control current flowing in the portion of the light emitting lines 10-1 to 10-5. In addition, a second driver IC 20-2 may be connected with remaining light emitting lines 10-6 to 10-10 within the backlight unit 10 through the connection lines 30, and the second driver IC 20-2 may control current flowing in the portion of the light emitting lines 10-6 to 10-10.

According to an embodiment, a deviation in output value between the plurality of driver ICs included in the display device may be present. Due to the particulars of a semiconductor process for manufacturing driver ICs, a deviation in a threshold voltage (Vth) of the plurality of driver ICs included in a single display device may be present, and accordingly, a deviation in output value corresponding to the respective driver ICs may be present.

According to an example, a deviation in output value corresponding to the respective driver ICs may occur even when a control signal for the respective light emitting lines to have a same luminance is applied to the plurality of driver ICs, and accordingly, luminance of the light emitting lines corresponding to the respective driver ICs may vary.

For example, an output value of the first driver IC 20-1 having a -2.5% deviation, and an output value of the second driver IC 20-2 having 2.5% deviation based on a target output value corresponding to the plurality of driver ICs may be assumed. In this case, an output value between a fifth light emitting line 10-5 and a sixth light emitting line 10-6 within the backlight unit 10 may have a 5% deviation, and a user may perceive a brightness difference in a screen within the single display. Accordingly, a problem of uniformity in a display device may occur.

Various embodiments for securing uniformity in a display device will be described below even when a deviation between the output values of the plurality of driver ICs provided in the display device is present by having a plurality of light emitting lines corresponding to the respective driver ICs positioned in a pre-set pattern within the backlight unit.

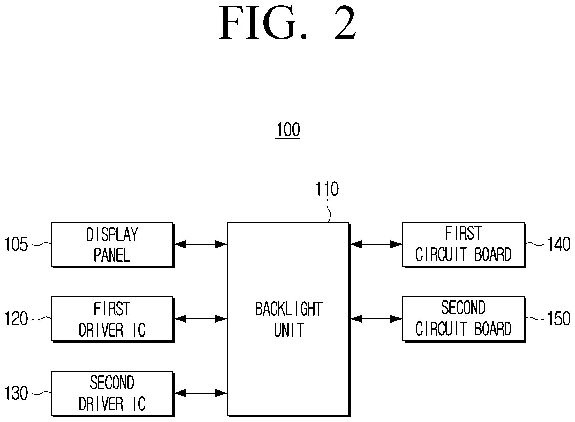

FIG. 2 is a block diagram illustrating a configuration of a display device according to an embodiment.

Referring to FIG. 2, a display device 100 includes a display panel 105, a backlight unit 110, a first driver IC 120 and a second driver IC 130. The display device 100 may further include a first circuit board 140 and a second circuit board 150.

The display device 100 may be implemented in various devices capable of playing back image content by including a display such as, for example, and without limitation, a smart television (TV), a tablet, a monitor, a desktop computer, a laptop computer, and the like according to an embodiment. The display device according to an embodiment of the disclosure is not limited to the above-described devices, and the display device may be implemented as a display device with at least two functions of the above-described devices.

According to an embodiment, the display device 100 may communicatively connect with an external device and an external server through various methods. According to an embodiment, a same communication module for communicating with the external device and the external server may be implemented. For example, the display device 100 may communicate with the external device using a Bluetooth module, and the external server may also communicate using the Bluetooth module.

The display panel 105 may be implemented as a display including self-emissive devices, or as a display including non-emissive devices. For example, the display panel 105 may be implemented as a display of various forms such as, for example, and without limitation, a liquid crystal display (LCD), an organic light emitting diode (OLED) display, a light emitting diodes (LED), a micro LED, a mini LED, a plasma display panel (PDP), a quantum dot (QD) display, a quantum dot light emitting diodes (QLED), or the like. The display panel 105 may be implemented as a touch screen coupled with a touch sensor, a flexible display, a rollable display, a three-dimensional display (3D display), a display physically connected with a plurality of display modules, or the like. A processor may control the display panel 105 to output an output image obtained according to the various embodiments described above. Here, the output image may be a high-resolution image of 4K or greater than or equal to 8K.

The display device 100 includes the backlight unit 10 which emits light. The display device 100 includes the backlight unit 110 which emits light through the plurality of light emitting lines which include first light emitting lines and second light emitting lines. According to an embodiment, an image may be displayed on the display panel 105 included in the display device 100 by emitting light through the backlight unit 110. According to an example, the backlight unit 110 may include a plurality of light sources, and the plurality of light sources may include a line light source such as a lamp, a point light source such as a light emitting diode, or the like, but is not limited thereto. The backlight unit 110 may be implemented as a direct type backlight unit, or an edge type backlight unit. The light source of the backlight unit 110 may be implemented with light emitting diodes (LEDs) according to an embodiment, but is not limited thereto. According to an example, the backlight unit 110 may include light sources of any one or at least two types from among a hot cathode fluorescent lamp (HCFL), a cold cathode fluorescent lamp (CCFL), an external electrode fluorescent lamp (EEFL), an ELP, or a FFL. However, the light source of the backlight unit 110 being implemented with an LED may be assumed for convenience of description below.

According to an example, the backlight unit 110 may be implemented with a plurality of LED modules and/or a plurality of LED cabinets. In addition, a LED module may include LED pixels in plurality, and the LED pixel according to an example may be implemented as a blue LED or a white LED, but is not limited thereto, and may be implemented in a form that includes at least one from among a red LED, a green LED, or a blue LED.

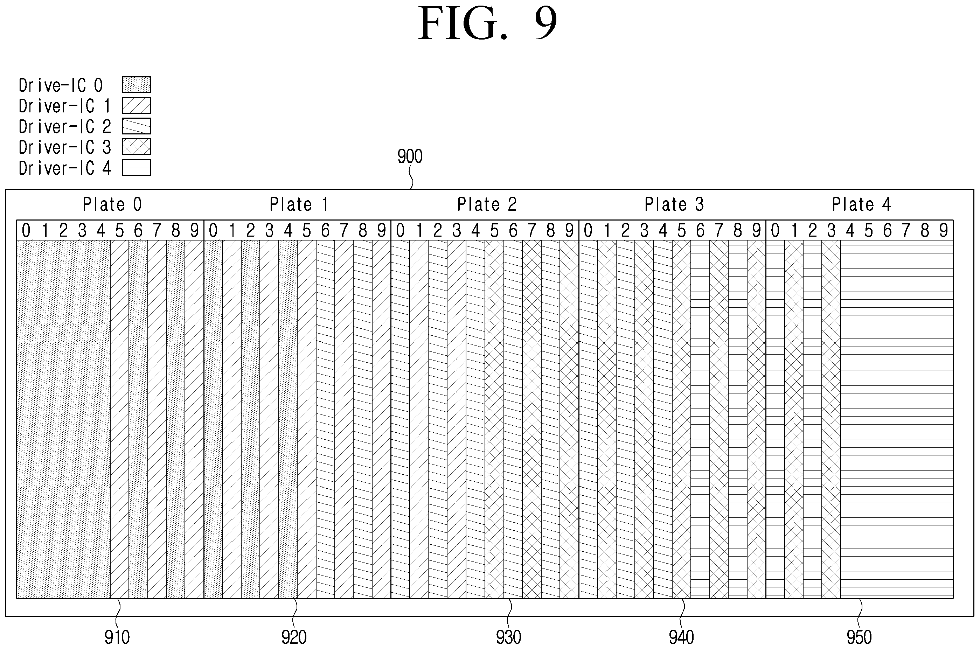

The backlight unit 110 includes a plurality of light emitting devices which include the first light emitting lines and the second light emitting lines. The backlight unit 110 may include a plurality of light emitting devices disposed (or arranged) in a matrix form, and the backlight unit 110 may be divided into the plurality of light emitting lines as shown in FIG. 1. The respective light emitting lines may include at least one light emitting device, and the respective light emitting lines may correspond with different regions of the backlight unit 110 which does not overlap with one another. According to an example, the backlight unit 110 may be in a structure in which a plurality of plates are included. For example, as shown in FIG. 9, a plurality of plates may be included in the backlight unit. For example, light emitting lines of a pre-set number (e.g., ten lines) may be included in the respective plates.

The display device 100 includes the plurality of driver integrated circuits (driver ICs, or display driver IC (DDI)) which control current flowing in the plurality of light emitting lines included in the backlight unit 110.

The driver IC may be a semiconductor device which transmits a driving signal or data for an image to be displayed in the display panel 105 to the backlight unit 110. The driver IC is connected with the light emitting lines included in the backlight unit 110, and a magnitude of current flowing in the light emitting lines connected with the driver IC may be controlled by the driver IC. If the light emitting lines are implemented with LEDs, because brightness of the LEDs is proportionate to the magnitude of current flowing in the LEDs, brightness of the light emitting lines connected with the driver IC may also be controlled by the driver IC.

According to an embodiment, the plurality of driver ICs included in the display device 100 may operate in an active matrix (AM) driving method. According to an example, the driver IC may include a digital to analog converter (DAC). The DAC may be a device which converts a digital signal to an analog signal, and the magnitude of current that flows in the light emitting lines may vary according to performance of the DAC included in the driver IC. According to an example, a module which performs a timing controlling function and a signal holding function may be provided separately from the driver IC within the display device 100. Unlike a direct driving method of the related art in which the function of converting a digital signal into an analog signal, the timing controlling function, and the signal holding function are respectively performed in a signal driver IC, only the function of converting a digital signal into an analog signal may be performed in a display device 100. However, the above is not limited thereto.

The plurality of driver ICs provided in the display device 100 is connected with the plurality of light emitting lines. For example, the respective driver ICs may be connected with a maximum of sixteen light emitting lines, but this is merely one embodiment, and the respective driver ICs may be connected with light emitting lines of different numbers.

The display device 100 includes a first driver IC 120 which controls first current flowing in a plurality of first light emitting lines and a second driver IC 130 which controls second current flowing in a plurality of second light emitting lines. According to an example, the plurality of first light emitting lines may include a plurality of light emitting device blocks connected with the first driver IC, and the plurality of second light emitting lines may include a plurality of light emitting device blocks connected with the second driver IC. As shown in FIG. 1, the first driver IC may be connected with the plurality of light emitting device blocks (e.g., five blocks), and the plurality of first light emitting lines may include five light emitting device blocks connected with the first driver IC. The second driver IC may also be connected with the plurality of light emitting device blocks (e.g., five blocks), and the plurality of second light emitting lines may include five light emitting device blocks connected with the second driver IC.

A plurality of first connection lines connects the plurality of first light emitting lines from among the plurality of light emitting lines with the first driver IC 120. Further, a plurality of second connection lines connects the plurality of second light emitting lines with the second driver IC. The plurality of second light emitting lines is alternately disposed with the plurality of first light emitting lines from among the plurality of light emitting lines.

Since the plurality of first light emitting lines 410-1, 410-3, 410-5, 410-7, and 410-9 supplied with current through the first driver IC 420-1 and the plurality of second light emitting lines 410-2, 410-4, 410-6, 410-8, and 410-10 supplied with current through the second driver IC 420-2 is alternately disposed within the backlight unit 410, deviations in uniformity may not be perceived by the user even when a deviation in output value of the first driver IC 420-1 and the second driver IC 420-2 occurs. Thus, uniformity in luminance of the backlight unit 410 within the display device may be secured.

According to an embodiment, the display device 100 may include a circuit board which includes connection lines (or, cables) connected between the driver IC and the light emitting lines.

According to an example, the display device 100 may include the first circuit board 140 which includes the first connection lines connected between the first driver IC 120 and the first light emitting lines. The display device 100 according to an example may include the second circuit board 150 which includes the second connection lines connected between the second driver IC 130 and the second light emitting lines. The first driver IC 120 may supply current to the first light emitting lines through the first connection lines included in the first circuit board 140, and the second driver IC 130 may supply current to the second light emitting lines through the second connection lines included in the second circuit board 150.

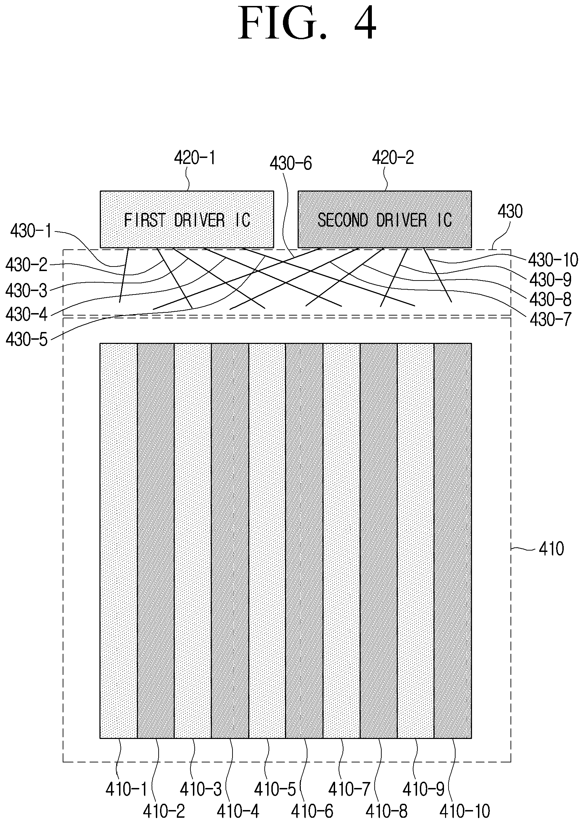

In this case, the first connection lines and the second connection lines according to an embodiment may be disposed in a pre-set pattern within the first circuit board 140 and the second circuit board 150, respectively. According to an example, in order for the first light emitting lines connected with the first driver IC 120 and the second light emitting lines connected with the second driver IC 130 to be alternately disposed within the backlight unit 110, the first connection lines and the second connection lines may be disposed in a pre-set pattern within the first circuit board 140 and the second circuit board 150, respectively. The above will be described in detail through FIG. 4.

Meanwhile, the display device 100 according to an embodiment may include a plurality of pixel integrated circuits (pixel ICs). The pixel IC may be a device which amplifies current received from the driver IC and controls the current such that the amplified current is supplied to the light emitting devices included within the backlight unit 110. According to an example, the backlight unit 110 may include pixel ICs for controlling the current flowing in the light emitting device. The pixel device IC may be provided at a position adjacent to the light emitting devices included within the backlight unit 110, and a single pixel IC may control current flowing in light emitting devices of a pre-set unit. For example, the single pixel IC may control current flowing in four light emitting devices, but is not limited thereto, and the single pixel IC may control current flowing in six or eight light emitting devices.

According to an example, the pixel IC may control current flowing in the light emitting devices based on a signal received from the driver IC and a switching signal received from a gate IC, but is not limited thereto. According to an example, the pixel IC may include a current mirror circuit. For example, the pixel IC may supply current which is current received from the driver IC that has been amplified to the light emitting devices through the current mirror circuit which includes at least one from among at least one of a transistor, an amplifier, and a diode.

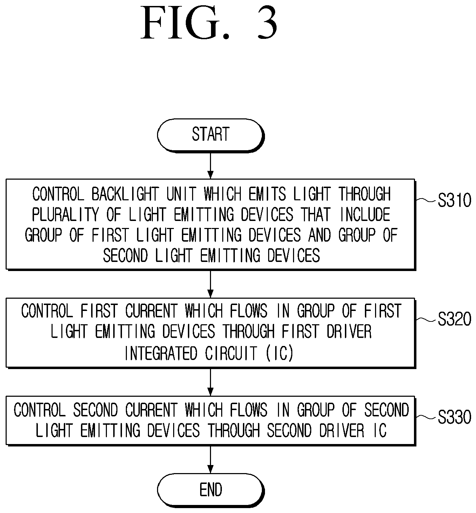

FIG. 3 is a flowchart illustrating a controlling method of a display device according to an embodiment.

First, a controlling method includes controlling the backlight unit which emits light through the plurality of light emitting devices which include the first light emitting lines and the second light emitting lines (S310). The backlight unit 110 includes the plurality of light emitting devices which include the plurality of first light emitting lines and the plurality of second light emitting lines, and the display device 100 controls the backlight unit 110 to emit light through the plurality of light emitting devices which include the plurality of first light emitting lines and the plurality of second light emitting lines.

Then, the controlling includes controlling first current which flows in the plurality of first light emitting lines through the first driver integrated circuit (IC) (S320). According to an example, the first driver IC 120 included in the display device 100 supplies current to the plurality of first light emitting lines included in the backlight unit 110 through the first connection line, and the first driver IC 120 controls first current which flows in the plurality of first light emitting lines.

Then, the controlling method according to an embodiment may include controlling second current which flows in the plurality of second light emitting lines through the second driver IC (S330). According to an example, the second driver IC 130 included in the display device 100 supplies current to the plurality of second light emitting lines included in the backlight unit 110 through the second connection line, and the plurality of second driver IC 130 control second current which flows in the second light emitting lines.

According to an embodiment, the first connection lines connected between the first driver IC 120 and the plurality of first light emitting lines within the first circuit board 140 and the second connection lines connected between the second driver IC 130 and the plurality of second light emitting lines within the second circuit board 150 may be disposed in a pre-set pattern. According to an example, the pre-set pattern may be a pattern in which the first connection lines and the second connection lines are disposed within the first circuit board 140 and the second circuit board 150, respectively, for the plurality of first light emitting lines and the plurality of second light emitting lines to be alternately positioned within the backlight unit 110. The above will be described in detail through FIG. 4.

FIG. 4 is a diagram illustrating a disposition structure of the first light emitting lines and the second light emitting lines according to an embodiment.

Referring to FIG. 4, a plurality of first light emitting lines 410-1, 410-3, 410-5, 410-7, and 410-9 and a plurality of second light emitting lines 410-2, 410-4, 410-6, 410-8, and 410-10 included in a backlight unit 410 are alternately positioned within the backlight unit 410. Here, the plurality of first light emitting lines 410-1, 410-3, 410-5, 410-7, and 410-9 and the plurality of second light emitting lines 410-2, 410-4, 410-6, 410-8, and 410-10 may respectively include a plurality of light emitting device blocks.

A first driver IC 420-1 is connected with the first light emitting lines 410-1, 410-3, 410-5, 410-7, and 410-9 through first connection lines 430-1, 430-2, 430-3, 430-4, and 430-5, and a second driver IC 420-2 is connected with the second light emitting lines 410-2, 410-4, 410-6, 410-8, and 410-10 through second connection lines 430-6, 430-7, 430-8, 430-9, and 430-10. According to an example, the first connection lines 430-1, 430-2, 430-3, 430-4, and 430-5 may be disposed on a first circuit board, and the second connection lines 430-6, 430-7, 430-8, 430-9, and 430-10 may be disposed on a second circuit board which is different from the first circuit board. That is, the first connection lines and the second connection lines may be disposed on different circuit boards. Distributing the driver ICs and the connection lines on different circuit boards may facilitate to connect the respective alternating light emitting lines and may further reduce heat concentration.

According to an example, the first connection lines 430-1, 430-2, 430-3, 430-4, and 430-5 and the second connection lines 430-6, 430-7, 430-8, 430-9, and 430-10 may be disposed in a pre-set pattern 430 within the first circuit board and the second circuit board, respectively. For example, the pre-set pattern 430 may be a pattern in which the first connection lines 430-1, 430-2, 430-3, 430-4, and 430-5 and the second connection lines 430-6, 430-7, 430-8, 430-9, and 430-10 are disposed within the first circuit board and the second circuit board, respectively, for the first light emitting lines 410-1, 410-3, 410-5, 410-7, and 410-9 and the second light emitting lines 410-2, 410-4, 410-6, 410-8, and 410-10 to be alternately positioned within a backlight unit.

According to an embodiment, the first driver IC 420-1 and the second driver IC 420-2 may be implemented such that a maximum deviation ratio between an output value of the first driver IC 420-1 and an output value of the second driver IC 420-2 is less than a threshold ratio.

According to an example, the driver IC included in the display device 100 may be implemented as a driver IC having an output value with a deviation ratio of less than 2.5% from a target output value (or, standard output value) of a general driver IC. For example, if a target output value of the driver IC of the related art is 1, the first driver IC and the second driver IC included in the display device 100 may be implemented as driver ICs having an output value within a threshold range (a range of an output value which is greater than 0.975 and is less than 1.025). In this case, the maximum deviation ratio between the output values of the plurality of driver ICs included in the display device 100 may be implemented so as to be less than 5%.

According to the example described above, a light emitting device block included in the first light emitting lines 410-1, 410-3, 410-5, 410-7, and 410-9 which is supplied with current through the first driver IC 420-1 and a light emitting device block included in the second light emitting lines 410-2, 410-4, 410-6, 410-8, and 410-10 which is supplied with current through the second driver IC 420-2 is alternately disposed within the backlight unit 410, and accordingly, problems with uniformity may not occur even when a deviation in output value of the first driver IC 420-1 and the second driver IC 420-2 occurs. That is, based on a plurality of pixel blocks to which different currents are applied being alternately positioned within the backlight unit, the user may not perceive a difference in luminance even when current flowing in the respective pixel blocks is different. Accordingly, uniformity in luminance within the display device may be secured.

According to an embodiment, light emitting lines may include a plurality of light emitting device blocks, and the driver IC may control current which flows in the plurality of light emitting device blocks. According to an example, the first driver IC 420-1 may control first current which flows in a plurality of first light emitting device blocks 410-1, 410-3, 410-5, 410-7, and 410-9 by being connected with the plurality of first light emitting device blocks 410-1, 410-3, 410-5, 410-7, and 410-9, and the second driver IC 420-2 may control second current which flows in a plurality of second light emitting device blocks 410-2, 410-4, 410-6, 410-8, and 410-10 by being connected with the second light emitting device blocks 410-2, 410-4, 410-6, 410-8, and 410-10.

According to an embodiment, unlike that shown in FIG. 4, the plurality of light emitting device blocks which include the plurality of first light emitting lines 410-1, 410-3, 410-5, 410-7, and 410-9 and the plurality of second light emitting lines 410-2, 410-4, 410-6, 410-8, and 410-10 may be disposed horizontally. According to an example, the plurality of light emitting device blocks may be disposed horizontally within the backlight unit 410, the first driver IC 420-1 may be disposed at any one from among a left side or a right side of the backlight unit 410, and the second driver IC 420-2 may be disposed at any one from among the left side or the right side of the backlight unit 410. However, the above is not limited thereto, and the plurality of driver ICs which include the first driver IC 420-1 and the second driver IC 420-2 may be disposed at an upper part or a lower part of the backlight unit 410, and the plurality of light emitting device blocks may also be disposed horizontally within the backlight unit 410.

According to an embodiment, the plurality of second light emitting lines 410-2, 410-4, 410-6, 410-8, and 410-10 may be alternately disposed at a n:m ratio with the plurality of first light emitting lines 410-1, 410-3, 410-5, 410-7, and 410-9.

According to an example, n and m may be integers greater than or equal to 1. According to an example, the plurality of second light emitting lines 410-2, 410-4, 410-6, 410-8, and 410-10 may be disposed at an equal ratio with the plurality of first light emitting lines 410-1, 410-3, 410-5, 410-7, and 410-9. In example embodiments, at least one of n or m is greater than 1. For example, if the plurality of second light emitting lines 410-2, 410-4, 410-6, 410-8, and 410-10 are alternately disposed at a 2:2 ratio with the plurality of first light emitting lines 410-1, 410-3, 410-5, 410-7, and 410-9, a set of two second light emitting lines 410-2, 410-4, 410-6, 410-8, and 410-10 and a set of two first light emitting lines 410-1, 410-3, 410-5, 410-7, and 410-9 may be alternately disposed within the backlight unit 410. Since the plurality of first light emitting lines 410-1, 410-3, 410-5, 410-7, and 410-9 supplied with current through the first driver IC 420-1 and the plurality of second light emitting lines 410-2, 410-4, 410-6, 410-8, and 410-10 supplied with current through the second driver IC 420-2 is alternately disposed within the backlight unit 410 with an n:m ratio, a uniformity problem received by the user is at least mitigated even when a deviation in output value of the first driver IC 420-1 and the second driver IC 420-2 occurs.

According to an example, the plurality of second light emitting lines 410-2, 410-4, 410-6, 410-8, and 410-10 may be disposed at an unequal ratio with the plurality of first light emitting lines 410-1, 410-3, 410-5, 410-7, and 410-9. For example, if the plurality of second light emitting lines 410-2, 410-4, 410-6, 410-8, and 410-10 are alternately disposed at a 1:2 ratio with the plurality of first light emitting lines 410-1, 410-3, 410-5, 410-7, and 410-9, one second light emitting lines 410-2, 410-4, 410-6, 410-8, and 410-10 and the set of two first light emitting lines 410-1, 410-3, 410-5, 410-7, and 410-9 may be alternately disposed within the backlight unit 410. However, the above is not limited thereto, and the second light emitting lines 410-2, 410-4, 410-6, 410-8, and 410-10 and the first light emitting lines 410-1, 410-3, 410-5, 410-7, and 410-9 may be alternately disposed within the backlight unit 410 at a ratio different from the above-described ratio. For example, if the plurality of second light emitting lines 410-2, 410-4, 410-6, 410-8, and 410-10 are alternately disposed at a 2:1 ratio with the plurality of first light emitting lines 410-1, 410-3, 410-5, 410-7, and 410-9, the set of two second light emitting lines 410-2, 410-4, 410-6, 410-8, and 410-10 and one first light emitting lines 410-1, 410-3, 410-5, 410-7, and 410-9 may be alternately disposed within the backlight unit 410.

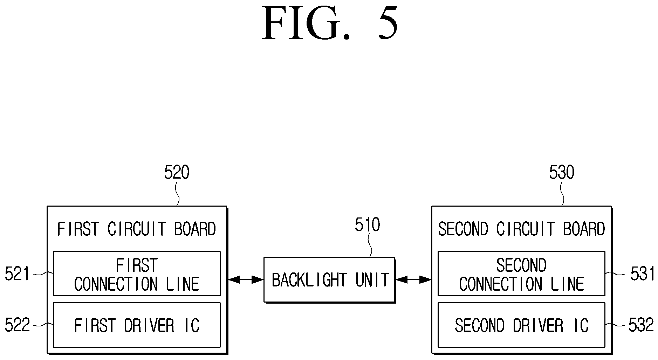

FIG. 5 is a diagram illustrating a configuration of a display device according to an embodiment.

Referring to FIG. 5, the display device 100 according to an embodiment includes a backlight unit 510 and may include a first circuit board 520 and a second circuit board 530. According to an embodiment, the first circuit board 520 and the second circuit board 530 may be respectively implemented as a printed circuit board (PCB). According to an example, the first circuit board (or first PCB 520) may include a first driver IC 522 and first connection lines 521, and the second circuit board (or second PCB 530) may include a second driver IC 532 and second connection lines 531.

According to an example, if the first circuit board 520 and the second circuit board 530 are respectively implemented as PCBs, the first connection lines 521 may be disposed in a pre-set PCB pattern (or, wiring) on the first circuit board 520, and the second connection lines 531 may also be disposed in the pre-set PCB pattern (or, wiring) on the second circuit board 530. The first driver IC 522 may control current which flows in the plurality of first light emitting lines through the first connection lines 521 disposed in the pre-set PCB pattern. The second driver IC 532 may control current which flows in the plurality of second light emitting lines through the second connection lines 531 disposed in the pre-set PCB pattern.

According to an embodiment, the first connection lines 521 may be implemented in a first PCB 520 pattern which is connected at one side of the respective first light emitting lines on the first circuit board 520, the second driver IC and the second connection lines 531 may be provided on the second circuit board 530, and the second connection lines 531 may be implemented in a second PCB 530 pattern which is connected at one side of the respective second light emitting lines on the second circuit board 530. According to an example, the first PCB 520 pattern and the second PCB 530 pattern may be PCB patterns for the plurality of first light emitting lines and the plurality of second light emitting lines to be alternately disposed within the backlight unit 510. According to an example, a plurality of first connection lines 521 included in the first PCB 520 pattern may be implemented in a PCB pattern which intersects with at least a portion from among a plurality of second connection lines 531 included in the second PCB 530 pattern. Thus, distributing the driver ICs and the connection lines on different printed circuit boards 520, 530 may facilitate connecting the respective alternating light emitting lines and may further reduce heat concentration.

At least one from among the first circuit board 520 and the second circuit board 530 according to an embodiment may be disposed on at least one from among an upper part or a lower part of the backlight unit 510, or at least one from among the first circuit board 520 and the second circuit board 530 may be disposed on at least one from among a left side or a right side of the backlight unit 510.

According to an example, the first circuit board 520 including the first driver IC 522 and the second circuit board 530 including the second driver IC 532 may be disposed at the upper part of the backlight unit 510. Alternatively, the first circuit board 520 and the second circuit board 530 according to an example may be disposed at the lower part of the backlight unit 510. Alternatively, the first circuit board 520 and the second circuit board 530 may be disposed relatively toward the left side of the backlight unit 510, or disposed relatively toward the right side thereof. However, the above is not limited thereto, and the first circuit board 520 may be disposed at the upper part of the first circuit board 520 and the second circuit board 530 may be disposed at the lower part of the backlight unit 510. According to an example, the first circuit board 520 may be disposed at one side of the backlight unit 510, and the second circuit board 530 may be disposed at another side of the backlight unit 510. Alternatively, the plurality of driver ICs which include the first driver IC 522 and the second driver IC 532 according to an example may be disposed at a back surface of the backlight unit 510.

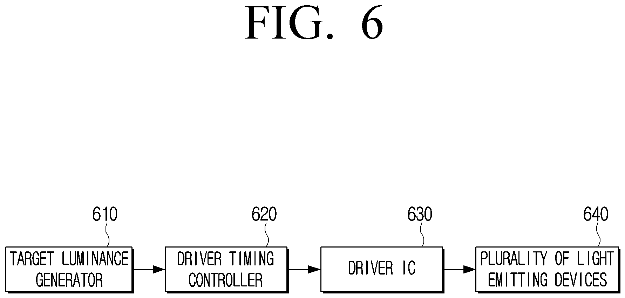

FIG. 6 is a diagram illustrating a driving method of a backlight unit according to an embodiment.

Referring to FIG. 6, the display device 100 may include a target luminance generator 610, a driver timing controller 620, a driver IC 630, and a plurality of light emitting devices 640.

The target luminance generator 610 may generate data on luminance of the light emitting device included in the backlight unit included in the display device 10 by using information on an image (or, input image) to be displayed through the display device 100. According to an example, the information on luminance may include driving time information and driving magnitude information of the plurality of light emitting device blocks included in the backlight unit. For example, the driving time information may be a pulse width modulation (PWM) signal in which a duty ratio is varied based on a dimming signal, and the driving magnitude information may be a pulse amplitude modulation (PAM) signal.

The driver timing controller 620 may generate driving time-point information of the plurality of light emitting devices 640 included in the backlight unit. The driver timing controller may be implemented with a microcontroller unit (MCU) or an application specific integrated circuit (ASIC) according to an example. According to an example, the driving time-point information may include information on driving time-points (or, light emitting time-points) of the respective light emitting devices 640 included in the backlight unit. According to an example, the driver IC 630 may control current which flows in the light emitting devices 640 based on the driving time-point information of the plurality of light emitting devices 640 received from the driver timing controller 620. For example, the first driver IC may control, based on the driving time-point information of the first light emitting lines corresponding to the first driver IC being received from the driver timing controller 620, first current which flows in the first light emitting lines based therefrom. The second driver IC may control, based on the driving time-point information of the second light emitting lines corresponding to the second driver IC being received from the driver timing controller 620, second current which flows in the second light emitting lines based therefrom.

According to an embodiment, the driver timing controller 620 may receive information on luminance of the light emitting devices 640 included in the backlight unit from the target luminance generator 610. Here, the information on luminance of the plurality of light emitting devices 640 included in the backlight unit may include information on luminance of the light emitting lines corresponding to the driver IC 630.

According to an example, the information on luminance of the plurality of light emitting devices 640 included in the backlight unit may include information on luminance of the first light emitting lines corresponding to the first driver IC and information on luminance of the second light emitting lines corresponding to the second driver IC. According to an example, the information on luminance of the first light emitting lines may include driving time information and driving magnitude information of the first light emitting lines, and the information on luminance of the second light emitting lines may include driving time information and driving magnitude information of the second light emitting lines.

Then, the driver timing controller 620 according to an embodiment may transmit the received information on luminance and driving time-point information of the light emitting devices to the driver IC 630 which includes the first driver IC and the second driver IC.

According to an example, the driver timing controller 620 may generate driving time-point information corresponding to the first light emitting lines and the second light emitting lines included in the backlight unit. The driver timing controller 620 may transmit information on luminance of the first light emitting lines received from the target luminance generator 610 and the generated driving time-point information to the first driver IC, and transmit information on luminance of the second light emitting lines received from the target luminance generator 610 and the generated driving time-point information to the second driver IC.

For example, the driver timing controller 620 may transmit, based on the driving time information and the driving magnitude information of the first light emitting lines included in the backlight unit being received from the target luminance generator 610, the driving time information, the driving magnitude information, and the driving time-point information of the first light emitting lines to the first driver IC. In addition, the driver timing controller 620 may transmit, based on the driving time information and the driving magnitude information of the second light emitting lines included in the backlight unit being received from the target luminance generator 610, the driving time information, the driving magnitude information, and the driving time-point information of the second light emitting lines to the second driver IC.

According to an embodiment, the driver IC 630 may control current which flows in the plurality of light emitting devices 640 based on information received from the driver timing controller 620.

According to an example, the first driver IC may control first current which flows in the first light emitting lines based on information on luminance of the first light emitting lines received from the driver timing controller 620 and the driving time-point information. The second driver IC may control second current which flows in the second light emitting lines based on information on luminance of the second light emitting lines received from the driver timing controller 620 and the driving time-point information.

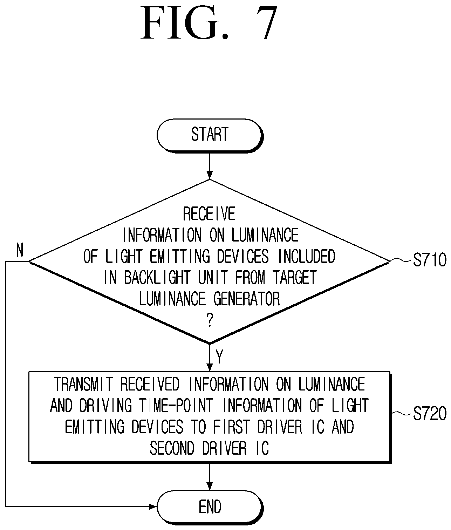

FIG. 7 is a diagram illustrating a method of receiving information for controlling light emitting devices by a driver IC according to an embodiment.

Referring to FIG. 7, first, a controlling method according to an embodiment may include identifying whether information on luminance of the light emitting devices included in the backlight unit 110 is received from the target luminance generator (S710).

According to an example, the target luminance generator may generate information on luminance of the light emitting devices included in the backlight unit 110 using information on an image (or, input image) to be displayed through the display device 100. For example, the target luminance generator may generate information on luminance of the first light emitting lines corresponding to the first driver IC 120 and information on luminance of the second light emitting lines corresponding to the second driver IC 130. According to an example, the information on luminance of the first light emitting lines may include driving time information and driving magnitude information of the first light emitting lines, and the information on luminance of the second light emitting lines may include driving time information and driving magnitude information of the second light emitting lines.

According to an example, the driver timing controller may receive information on luminance of the first light emitting lines which include the driving time information and the driving magnitude information of the first light emitting lines, and receive information on luminance of the second light emitting lines which include the driving time information and the driving magnitude information of the second light emitting lines from the target luminance generator.

Then, the controlling method according to an embodiment may include transmitting, based on information on luminance of the light emitting devices included in the backlight unit 110 being received (S710: Y), the received information on luminance and driving time-point information of the light emitting devices to the first driver IC 120 and the second driver IC 130 (S720).

According to an example, the driver timing controller may transmit driving time information, driving magnitude information, and driving time-point information of the first light emitting lines included in the backlight unit 110 from the target luminance generator to the first driver IC 120. In addition, the driver timing controller 620 may transmit driving time information, driving magnitude information, and driving time-point information of the second light emitting lines to the second driver IC 130.

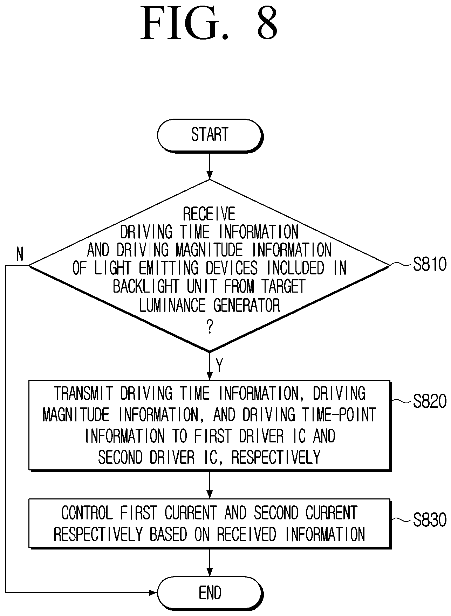

FIG. 8 is a diagram illustrating a method of controlling first current and second current according to an embodiment.

Referring to FIG. 8, a controlling method according to an embodiment may include, first, identifying whether driving time information and driving magnitude information of the light emitting devices included in the backlight unit 110 is received from the target luminance generator (S810).

According to an example, the target luminance generator may generate driving time information and driving magnitude information of the first light emitting lines included in the backlight unit 110, and generate driving time information and driving magnitude information of the second light emitting lines included in the backlight unit 110 using information on an image (or, input image) to be displayed through the display device 100. The driver timing controller may receive driving time information and driving magnitude information of the first light emitting lines and driving time information and driving magnitude information of the second light emitting lines from the target luminance generator.

Then, the controlling method according to an embodiment may include transmitting, based on driving time information and driving magnitude information of the light emitting devices included in the backlight unit 110 being received (S810: Y), driving time information, driving magnitude information, and driving time-point information to the first driver IC 120 and the second driver IC 130, respectively.

According to an example, the driver timing controller may generate driving time-point information of the first light emitting lines and the second light emitting lines. The driver timing controller may transmit driving time-point information of the first light emitting lines, the received driving time information of the first light emitting lines, and driving magnitude information to the first driver IC 120, and transmit the generated driving time-point information of the second light emitting lines, and driving time information and driving magnitude information of the second light emitting lines to the second driver IC 130.

Then, the controlling method according to an embodiment may include controlling first current and second current respectively based on the received information (S830). According to an example, the first driver IC 120 may control, based on driving time-point information, driving time information, and driving magnitude information of the first light emitting lines being received, first current which flows in the first light emitting lines based on the received information. The second driver IC 130 may control, based on driving time-point information, driving time information, and driving magnitude information of the second light emitting lines being received, second current which flows in the second light emitting lines based on the received information.

FIG. 9 is a diagram illustrating a display device implemented with a plurality of driver ICs according to an embodiment.

The display device 100 includes a plurality of driver ICs for controlling a plurality of light emitting devices included in a backlight unit. Referring to FIG. 9, the display device 100 includes a plurality of driver ICs (Driver-IC 0, Driver-IC 1, Driver-IC 2, Driver-IC 3, and Driver-IC 4). According to an example, the respective driver ICs control current which flows in at least one light emitting line within a backlight unit 900 included in the display device 100.

According to an embodiment, the backlight unit 900 may include a plurality of light emitting device plates 910 to 950. Here, the light emitting device plates 910 to 950 may be a set of the plurality of light emitting device blocks. For example, the device plates 910 to 950 may be located at or refer to different regions of the backlight unit 900. For example, as shown in FIG. 9, the respective light emitting device plates 910 to 950 may include ten light emitting device blocks, but is not limited thereto. According to an example, the respective driver ICs (Driver-IC 0, Driver-IC 1, Driver-IC 2, Driver-IC 3, and Driver-IC 4) may be connected with the plurality of light emitting device blocks (or, light emitting lines).

According to an embodiment, the display device 100 may further include a third driver IC and a plurality of third connection lines which connect a plurality of third light emitting lines from among the plurality of light emitting lines with the third driver IC. According to an example, the third connection lines may be implemented so as to be connected at one side of the plurality of third light emitting lines included in a second region, a third region, and a fourth region which is adjacent to the third region of the backlight unit.

For example, a first driver IC (Driver-IC 0) may be connected with the light emitting device blocks included in a first plate 910 and a second plate 920, and may control current which flows in the connected light emitting device blocks. A second driver IC (Driver-IC 1) may be connected with the light emitting device blocks included in the first plate 910, the second plate 920, and a third plate 930, and may control current which flows in the connected light emitting device blocks. A third driver IC (Driver-IC 2) may be connected with the light emitting device blocks included in the second plate 920, the third plate 930, and a fourth plate 940, and may control current which flows in the connected light emitting device blocks. A fourth driver IC (Driver-IC 3) may be connected with the light emitting device blocks included in the third plate 930, the fourth plate 940, and a fifth plate 950, and may control current which flows in the connected light emitting device blocks. A fifth driver IC (Driver-IC 4) may be connected with the light emitting device blocks included in the fourth plate 940, and the fifth plate 950, and may control current which flows in the connected light emitting device blocks. Thus, due to a need for a high output current, a current control is distributed over a plurality of driver ICs instead of a single driver IC.

According to an example, the respective driver ICs (Driver-IC 0, Driver-IC 1, Driver-IC 2, Driver-IC 3, and Driver-IC 4) may be disposed within different circuit boards. According to an example, connection lines may be included within the circuit boards on which the respective driver ICs (Driver-IC 0, Driver-IC 1, Driver-IC 2, Driver-IC 3, and Driver-IC 4) are disposed, and the respective driver ICs may be connected with the light emitting device blocks through the connection lines. Since a current control may be distributed over a plurality of driver ICs located at different circuit boards, a connecting of the light emitting blocks can be facilitated while overheating of a driver IC may be avoided.

According to an embodiment, the display device 100 may include the plurality of third light emitting lines which are alternately disposed with the plurality of first light emitting lines or the plurality of second light emitting lines from among the plurality of light emitting lines, and the plurality of third connection lines which connect the third driver IC. According to an example, as shown in FIG. 9, the connection lines may be disposed in a pre-set pattern for the light emitting device blocks corresponding to the respective driver ICs (Driver-IC 0, Driver-IC 1, Driver-IC 2, Driver-IC 3, and Driver-IC 4) to be alternately positioned within the backlight unit 900. Since the light emitting device blocks are alternately positioned within the backlight unit 900, a problem of output uniformity perceived by the user may be avoided even when output values of different driver ICs deviate. For example, the connection lines may be disposed for the light emitting device blocks corresponding to the second driver IC (Driver-IC 1) to be positioned at the first plate 910, the second plate 920, and the third plate 930, respectively. Likewise, the connection lines may be disposed for the light emitting device blocks corresponding to the third driver IC (Driver-IC 2) to be positioned at the second plate 920, the third plate 930, and the fourth plate 940, respectively.

According to an embodiment, a plurality of connection lines may be disposed in a pre-set pattern for the light emitting device blocks corresponding to positions at which the plurality of plates are adjacent within the backlight unit 900 to be alternately positioned within the backlight unit 900. For example, a portion from among the light emitting device blocks corresponding to the first driver IC (Driver-IC 0) according to an example may not be alternately positioned with other light emitting device blocks with in the first plate 910. For example, a portion (or, light emitting device blocks corresponding to positions adjacent with the second plate 920) from among the light emitting device blocks corresponding to the first driver IC (Driver-IC 0) included in the first plate 910 may be alternately positioned with the light emitting device blocks corresponding to the second driver IC (Driver-IC 1), and the remaining light emitting device blocks may not be alternately positioned with the light emitting device blocks corresponding to the second driver IC (Driver-IC 1). Alternatively, a portion from among the light emitting device blocks corresponding to the fifth driver IC (Driver-IC 4) may not be alternately positioned with other light emitting device blocks within the fifth plate 950. Since the light emitting device blocks are alternately positioned within the backlight unit 900, a problem of output uniformity perceived by the user may be mitigated even when output values of different driver ICs deviate.

However, the above is merely one embodiment, and the driver ICs of a number different from the driver ICs shown in FIG. 9 may be included in the display device 100. In addition, as shown in FIG. 9, a number of the light emitting device blocks connected with any one driver IC may be ten, but this is merely one embodiment, and the number of light emitting device blocks connected with any one driver IC may be different.

According to an embodiment, the first circuit board may be disposed at one side of the backlight unit 900 which corresponds to a first region of the backlight unit 900, and the second circuit board may be disposed at one side of the backlight unit 900 which correspond to the second region which is adj acent to the first region of the backlight unit 900. According to an example, the first circuit board may be disposed at a relatively upper side of the backlight unit 900 which corresponds to the first plate 910, and the second circuit board may be disposed at a relatively upper side of the backlight unit 900 which corresponds to the second plate 920.

According to an embodiment, the first connection lines may be implemented so as to be connected at one side of the plurality of first light emitting lines included in the first region and the second region of the backlight unit 900, and the second connection lines may be implemented so as to be connected at one side of the plurality of second light emitting lines included in the first region and the second region of the backlight unit 900. According to an example, the first connection lines corresponding to the first circuit board may be implemented so as to be connected at one side of the plurality of first light emitting lines included in the first plate 910 and the second plate 920. The second connection lines may be implemented so as to be connected at one side of the plurality of second light emitting lines included in the first plate 910, the second plate 920, and the third plate 930.

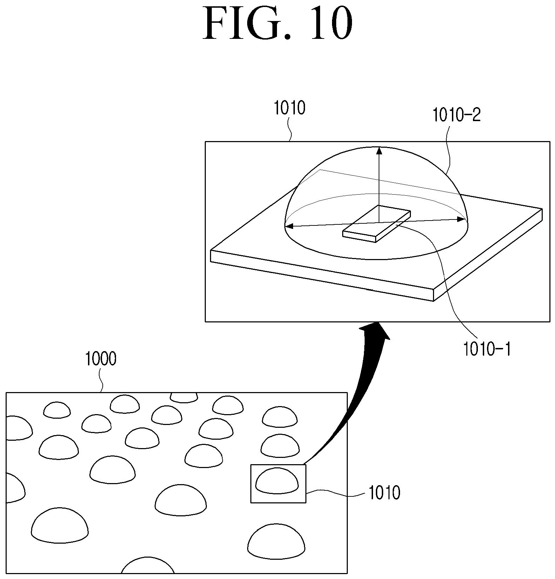

FIG. 10 is a diagram illustrating a structure of a light emitting device according to an embodiment. Referring to FIG. 10, a backlight unit 1000 according to an embodiment may include a plurality of light emitting devices. The plurality of light emitting devices may be disposed on the backlight unit 1000 at present intervals. The respective light emitting devices included in the backlight unit 1000 may include silicone domes 1010-2. The silicone domes may assist in light emitted from a light emitting part 1010-1 being diffused. Based on light corresponding to the respective light emitting devices included in the backlight unit 1000 being diffused, the emitted light may overlap with light being emitted from neighboring light emitting devices, and accordingly visibility may be improved. That is, even if a magnitude of light emitted from the respective first light emitting lines and second light emitting lines present at an adjacent position is different, the light emitted from the first light emitting lines and the light emitted from the second light emitting lines may be overlapped. Accordingly, visibility of the user may be improved because the user is not able to perceive a difference in brightness of the first light emitting lines and the second light emitting lines. In addition, visibility of the user may be improved due to a blooming phenomenon of light in a region at a surrounding of an image which is displayed within the display appearing as if the light is spreading, may be reduced.

According to an example, a light emitting device 1010 may include a light emitting part 1010-1 and a silicone dome 1010-2. The light emitting part 1010-1 may be implemented as, for example, a mini-LED. The silicone dome 1010-2 may be implemented in a pre-set size and disposed at one side within the light emitting devices. For example, an outside diameter of the silicone dome may be 2.5 millimeters (mm), and a height thereof may be 0.7 mm. According to an example, a ratio (or, aspect ratio) between the outside diameter of the silicone dome and the height of the silicone dome may be a value between 0.245 and 0.305, but is not limited thereto.

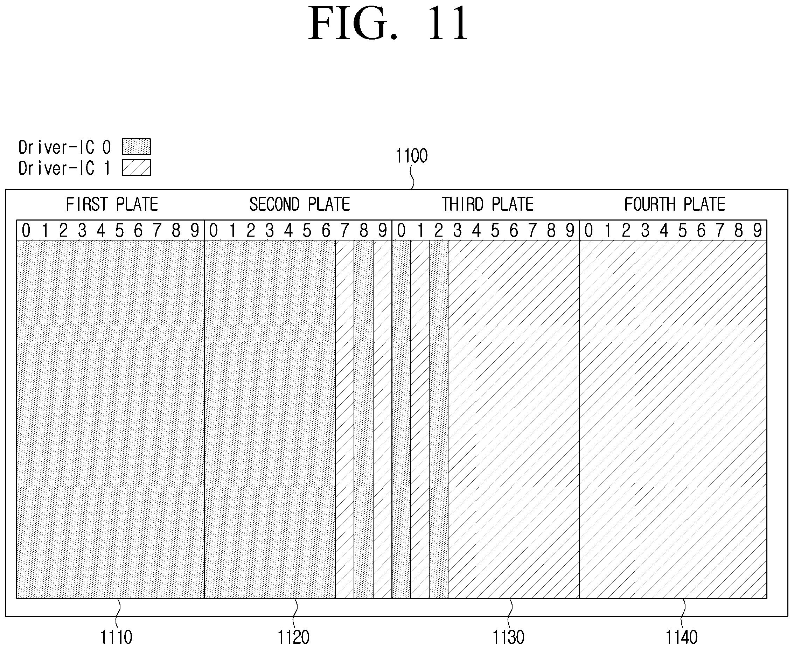

FIG. 11 is a diagram illustrating a display device implemented with a plurality of driver ICs according to an embodiment.

Referring to FIG. 11, according to an embodiment, a backlight unit 1100 may include a plurality of light emitting device plates 1110, 1120, 1130 and 1140. The connection lines may be disposed in a pre-set pattern for a portion from among the light emitting device blocks (or, light emitting lines) corresponding to the respective driver ICs (Driver-IC 0, and Driver-IC 1) to be alternately positioned within the at least one light emitting device plate within the backlight unit 1100.

According to an example, twenty light emitting lines corresponding to each of the first driver IC (Driver-IC 0) and the second driver IC (Driver-IC 1) may be present, respectively. According to an example, only a portion of the light emitting lines from among the light emitting lines corresponding to the first driver IC (Driver-IC 0) may be alternately positioned with the light emitting lines corresponding to the second driver IC (Driver-IC 1). For example, the first connection lines which connect the first driver IC with the first light emitting lines and the second connection lines which connect the second driver IC with the second light emitting lines may be disposed in a pre-set pattern for the light emitting lines corresponding to an adjacent position between a second plate 1120 and a third plate 1130 from among the light emitting lines corresponding to the first driver IC (Driver-IC 0) to be alternately positioned with the light emitting lines corresponding to an adjacent position between the second plate 1120 and a third plate 1130 from among the light emitting lines corresponding to the second driver IC (Driver-IC 1). By the distribution of first light emitting lines and second light emitting lines, a uniformity problem perceived by the user is at least mitigated even when a deviation in output value of the first driver IC 420-1 and the second driver IC 420-2 occurs.

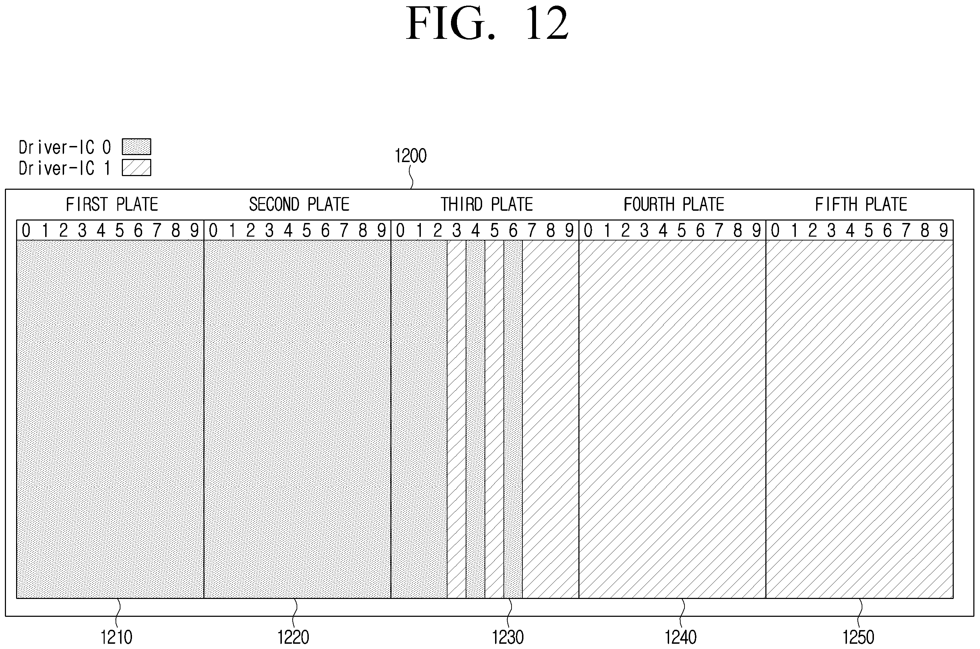

FIG. 12 is a diagram illustrating a display device implemented with a plurality of driver ICs according to an embodiment.

Referring to FIG. 12, according to an embodiment, a backlight unit 1200 may include a plurality of light emitting device plates 1210, 1220, 1230, 1240, and 1250. The connection lines may be disposed in a pre-set pattern for a portion from among the light emitting device blocks (or, light emitting lines) corresponding to the respective driver ICs (Driver-IC 0, and Driver-IC 1) to be alternately positioned within the at least one light emitting device plate within the backlight unit 1200.

According to an example, twenty-five light emitting lines corresponding to each of the first driver IC (Driver-IC 0) and the second driver IC (Driver-IC 1) may be present, respectively. According to an example, only a portion of the light emitting lines from among the light emitting lines corresponding to the first driver IC (Driver-IC 0) may be alternately positioned with the light emitting lines corresponding to the second driver IC (Driver-IC 1). For example, the first connection lines which connect the first driver IC with the first light emitting lines and the second connection lines which connect the second driver IC with the second light emitting lines may be disposed in a pre-set pattern for a portion from among the light emitting lines corresponding to the first driver IC (Driver-IC 0) and corresponding to a third plate 1230 to be alternately positioned with a portion from among the light emitting lines corresponding to the second driver IC (Driver-IC 1) and corresponding to the third plate 1230.

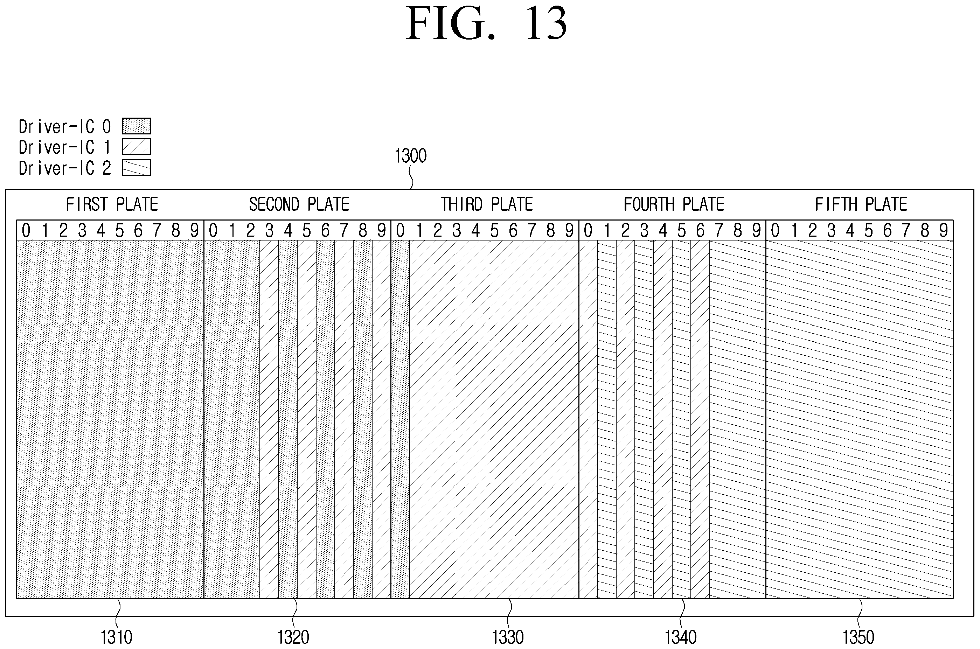

FIG. 13 is a diagram illustrating a display device implemented with a plurality of driver ICs according to an embodiment.

Referring to FIG. 13, according to an embodiment, a backlight unit 1300 may include a plurality of light emitting device plates 1310, 1320, 1330, 1340 and 1350. The connection lines may be disposed in a pre-set pattern for a portion from among the light emitting device blocks (or, light emitting lines) corresponding to the respective driver ICs (Driver-IC 0, Driver-IC 1, and Driver-IC 2) to be alternately positioned within the at least one light emitting device plate within the backlight unit 1300.

According to an example, seventeen light emitting lines corresponding to each of the first driver IC (Driver-IC 0) and the second driver IC (Driver-IC 1) may be present, respectively, and sixteen light emitting lines corresponding to the third driver IC (Driver-IC 2) may be present. According to an example, only a portion of the light emitting lines from among the light emitting lines corresponding to the first driver IC (Driver-IC 0) may be alternately positioned with the light emitting lines corresponding to the second driver IC (Driver-IC 1).

For example, the first connection lines which connect the first driver IC with the first light emitting lines and the second connection lines which connect the second driver IC with the second light emitting lines may be disposed in a pre-set pattern for light emitting lines corresponding to an adjacent position between a second plate 1320 and a third plate 1330 from among the light emitting lines corresponding to the first driver IC (Driver-IC 0) to be alternately positioned with light emitting lines corresponding to an adjacent position between the second plate 1320 and the third plate 1330 from among the light emitting lines corresponding to the second driver IC (Driver-IC 1). Alternatively, for example, the third connection lines which connect the third driver IC with the third light emitting lines and the second connection lines which connect the second driver IC with the second light emitting lines may be disposed in a pre-set pattern for a portion from among the light emitting lines corresponding to the third driver IC (Driver-IC 2) and corresponding to a fourth plate 1340 to be alternately positioned with a portion from among the light emitting lines corresponding to the second driver IC (Driver-IC 1) and corresponding to the fourth plate 1340.

According to the example described above, by having the light emitting lines corresponding to the respective driver ICs to be positioned in a pre-set pattern within the backlight unit, uniformity in luminance of the display device may be secured even when a deviation between the output values of the plurality of driver ICs provided in the display device is present. Accordingly, user satisfaction may be enhanced.

The methods according to the various embodiments of the disclosure described above may be implemented in an application form installable in a display device of the related art. Alternatively, methods according to the various embodiments of the disclosure described above may be performed using a deep learning-based trained neural network (or deep trained neural network), that is, a learning network model. In addition, the methods according to the various embodiments of the disclosure described above may be implemented with only a software upgrade, or a hardware upgrade for the display devices of the related art. In addition, the various embodiments of the disclosure described above may be performed through an embedded server provided in the display device, or through an external server of the display device.

According to an embodiment of the disclosure, the various embodiments described above may be implemented with software including instructions stored in a machine-readable storage media (e.g., computer). The machine may call a stored instruction from the storage medium, and as a device operable according to the called instruction, may include a display device (e.g., display device (A)) according to the above-mentioned embodiments. Based on a command being executed by the processor, the processor may directly or using other elements under the control of the processor perform a function corresponding to the command. The command may include a code provided by a compiler or executed by an interpreter. The machine-readable storage medium may be provided in the form of a non-transitory storage medium. Herein, 'non-transitory' merely means that the storage medium is tangible and does not include a signal, and the term does not differentiate data being semi-permanently stored or being temporarily stored in the storage medium.

In addition, according to an embodiment, a method according to the various embodiments described above may be provided included a computer program product. The computer program product may be exchanged between a seller and a purchaser as a commodity. The computer program product may be distributed in the form of a machine-readable storage medium (e.g., a compact disc read only memory (CD-ROM)), or distributed online through an application store (e.g., PLAYSTORE^{™}). In the case of online distribution, at least a portion of the computer program product may be stored at least temporarily in the storage medium such as a server of a manufacturer, a server of an application store, or a memory of a relay server, or temporarily generated.

In addition, each of the elements (e.g., a module or a program) according to various embodiments described above may be formed as a single entity or a plurality of entities, and some sub-elements of the above-mentioned sub-elements may be omitted, or other sub-elements may be further included in the various embodiments. Alternatively or additionally, some elements (e.g., modules or programs) may be integrated into one entity to perform the same or similar functions performed by the respective elements prior to integration. Operations performed by a module, a program, or another element, in accordance with various embodiments, may be executed sequentially, in a parallel, repetitively, or in a heuristic manner, or at least some operations may be executed in a different order, omitted or a different operation may be added.

While the disclosure has been illustrated and described with reference to example embodiments thereof, the disclosure is not limited to the embodiments specifically described and various modifications may be made therein by those skilled in the art to which this disclosure pertains without departing from the spirit and scope of the disclosure, and such modifications shall not be understood as separate from the technical concept or outlook of the present disclosure.

## Claims

1. A display device, comprising:
a display panel;
a backlight unit disposed at a back surface of the display panel, and comprising a plurality of light emitting lines;
a first driver integrated circuit (IC) and a second driver IC;
a plurality of first connection lines configured to connect a plurality of first light emitting lines from among the plurality of light emitting lines with the first driver IC; and
a plurality of second connection lines configured to connect a plurality of second light emitting lines alternately disposed with the plurality of first light emitting lines from among the plurality of light emitting lines with the second driver IC.

2. The display device of claim 1, wherein
the first driver IC and the first connection lines are provided on a first printed circuit board (PCB),
the first connection lines are implemented in a first PCB pattern which is connected at one side of the respective first light emitting lines on the first PCB,
the second driver IC and the second connection lines are provided on a second printed circuit board (PCB), and
the second connection lines are implemented in a second PCB pattern which is connected at one side of the respective second light emitting lines on the second PCB.

3. The display device of claim 2, wherein
the first PCB is disposed at one side of the backlight unit corresponding to a first region of the backlight unit,
the second PCB is disposed at one side of the backlight unit corresponding to a second region adjacent to the first region of the backlight unit,
the first connection lines are implemented so as to be connected at one side of the plurality of first light emitting lines comprised in the first region and the second region of the backlight unit, and
the second connection lines are implemented so as to be connected at one side of the plurality of second light emitting lines comprised in the first region and the second region of the backlight unit.

4. The display device of claim 3, wherein
the plurality of first connection lines comprised in the first PCB pattern are implemented in a PCB pattern which intersects with at least a portion from among the plurality of second connection lines comprised in the second PCB pattern.

5. The display device of claim 3, wherein
at least one from among the first PCB and the second PCB is disposed on at least one from among an upper part or a lower part of the backlight unit, or
at least one from among the first PCB and the second PCB is disposed on at least one from among a left side or a right side of the backlight unit.

6. The display device of claim 1, wherein
the first connection lines are implemented so as to be connected at one side of the plurality of first light emitting lines comprised in a first region and a second region which is adjacent to the first region of the backlight unit, and
the second connection lines are implemented so as to be connected at one side of the plurality of second light emitting lines comprised in the first region, the second region, and a third region which is adjacent to the second region of the backlight unit.

7. The display device of claim 6, further comprising:
a third driver IC; and
a plurality of third connection lines configured to connect a plurality of third light emitting lines from among the plurality of light emitting lines with the third driver IC,
wherein the third connection lines are implemented so as to be connected at one side of the plurality of third light emitting lines comprised in the second region, the third region, and a fourth region which is adjacent to the third region of the backlight unit.

8. The display device of claim 1, wherein
the plurality of second light emitting lines are alternately disposed at a n:m ratio with the plurality of first light emitting lines, and
the n and m are integers greater than or equal to 1 and at least one of n or m is greater than 1.

9. The display device of claim 1, further comprising:
a third driver IC; and
a plurality of third connection lines configured to connect a plurality of third light emitting lines, which are alternately disposed with the plurality of first light emitting lines or the plurality of second light emitting lines from among the plurality of light emitting lines, with the third driver IC.

10. The display device of claim 1, comprising
a plurality of driver ICs of at least four comprising the first driver IC and the second driver IC,
wherein the respective light emitting lines corresponding to the respective driver ICs are alternately disposed in a pre-set pattern within the backlight unit.

11. A controlling method of a display device, the method comprising:
emitting light through a backlight unit which is disposed at a back surface of the display panel and comprises a plurality of light emitting lines;
supplying current to a plurality of first light emitting lines through a plurality of first connection lines configured to connect the first light emitting lines from among the plurality of light emitting lines with a first driver integrated circuit (IC); and
supplying current to a plurality of second light emitting lines through a plurality of second connection lines configured to connect the second light emitting lines, which are alternately disposed with the plurality of first light emitting lines from among the plurality of light emitting lines, with a second driver IC.

12. The method of claim 11, wherein
the first driver IC and the first connection lines are provided on a first printed circuit board (PCB),
the first connection lines are implemented in a first PCB pattern so as to be connected at one side of the respective first light emitting lines on the first PCB,
the second driver IC and the second connection lines are provided on a second printed circuit board (PCB), and
the second connection lines are implemented in a second PCB pattern so as to be connected at one side of the respective second light emitting lines on the second PCB.

13. The method of claim 12, wherein
the first PCB is disposed at one side of the backlight unit corresponding to a first region of the backlight unit,
the second PCB is disposed at one side of the backlight unit corresponding to a second region adjacent to the first region of the backlight unit,
the first connection lines are implemented so as to be connected at one side of the plurality of first light emitting lines comprised in the first region and the second region of the backlight unit, and
the second connection lines are implemented so as to be connected at one side of the plurality of second light emitting lines comprised in the first region and the second region of the backlight unit.

14. The method of claim 13, wherein
the plurality of first connection lines comprised in the first PCB pattern are implemented in a PCB pattern which intersects with at least a portion from among the plurality of second connection lines comprised in the second PCB pattern.

15. A non-transitory computer-readable storage medium configured to store computer instructions for a display device to perform an operation when executed by a processor of the display device, the operation comprising:
emitting light through a backlight unit which is disposed at a back surface of the display panel and comprises a plurality of light emitting lines;
supplying current to a plurality of first light emitting lines through a plurality of first connection lines configured to connect the first light emitting lines from among the plurality of light emitting lines with a first driver integrated circuit (IC); and
supplying current to a plurality of second light emitting lines through a plurality of second connection lines configured to connect the second light emitting lines, which are alternately disposed with the plurality of first light emitting lines from among the plurality of light emitting lines, with a second driver IC.
